# EUROPEAN PATENT SPECIFICATION

(11) **EP 2 374 950 B1**
(45) Date of publication and mention of the grant of the patent: **10.08.2016**
(21) Application number: 11002447.8
(22) Date of filing: 24.03.2011
(51) Int. Cl.: E04B 1/76

(54) **Method for constructing an energy-efficient building**
Verfahren zum Bauen eines energieeffizienten Gebäudes
Procédé de construction d'un bâtiment à faible consommation énergétique

(30) Priority: 26.03.2010 EE 201000036 U
(43) Date of publication of application: 12.10.2011
(73) Proprietor: AS Amhold, 10615 Tallinn (EE)
(72) Inventor: Mägi, Arvu, 13918 Tallinn (EE)
(74) Representative: Koitel, Raivo

(56) References cited:
- EP-A1- 1 626 133
- EP-B1- 1 095 193
- ALUthermo: "INSTALLATION INSTRUCTIONS", , 7 May 2007 (2007-05-07), XP055049068, Retrieved from the Internet: URL:http://web.archive.org/web/20100307073 311/http://www.aluthermo.be/we_bilder/inst allation.pdf [retrieved on 2013-01-09]
- ALUthermo: "Aluthermo Quattro", , 15 December 2005 (2005-12-15), XP055049067, Retrieved from the Internet: URL:http://www.aluthermo.be/we_bilder/alut hermo_quattro_EN.pdf [retrieved on 2013-01-09]

## Description

### Technical field

The invention belongs in the field of construction, more specifically, the invention relates to a method of construction of an energy-efficient building, resulting In decreased consumption of heating and cooling energy in the building.

### Prior art

Due to the increasing need for energy, the price of the energy unit increases. The volume of energy necessary for the production of an energy unit and for the restoration of the environmental condition increases, too. Therefore it is vital to reduce the consumption of heating and cooling energy in existing and planned buildings.

To reduce energy consumption in existing buildings, one of the solutions is to install an additional layer of thermal insulation to the external boundaries, which would block thermal energy from escaping from the indoor premises. However, the installation of an additional layer of thermal Insulation is in many cases unsuitable or inexpedient due to economic, artistic, historical or legal reasons.

In a known solution (www.dnsfassaadid.ee) insulation panels are attached to the surface of external walls for the installation of additional insulation, a reinforcement layer from a special mesh is applied to the top surface of the panels, and the whole surface is coated with a light layer of plaster. With this solution the thickness of the external wall Increases due to the installed additional insulation and the volume of light entering the indoor premises through windows decreases, which has a negative impact on the use conditions of the building. The thermal insulation capacity of the glazed surface of windows in comparison with a wall surface of the same size is several times lower. Therefore it is extremely important that the glazed surface of windows at the external boundaries would be as small as possible, while letting maximum amount of light to indoor premises. In case of a thick external wall, such as when additional layer of thermal insulation is installed, less daylight will enter indoor premises in case of a glazed surface of the same size, when compared to a thin wall. The costs of such installation would also be substantial.

A known solution (CN101319522, Haiguang Dong, published on 10.12.2008) treats a design and installation of a thermal insulation panel for the insulation of external walls. The thermal insulation panel contains an inorganic fire-resistant layer, fire-retarding hard polyurethane foam, a decorative surface layer. To install the thermal insulation panel, the substrate of the external wall is treated, accessory substances (paint, dust, etc.) are removed from the surface of the external wall, the substrate is smoothed with a bonding mortar and one surface of the inorganic layer of the thermal insulation panel is bonded to the surface of the external wall. This solution requires the installation of a new coating and finishing layer to the external frontal which substantially Increases costs.

A known solution (US 2008302049, Stoneburner Kathleen Antoinette, published on 11.12.2008) presents a structural thermal insulation panel, which is intended for economic insulation of indoor premises. The thermal insulation panel contains a double layer of reflecting foil insulation with gaps, a foil radiation barrier layer as a packet, which insulate both the thermal energy and cooling energy. The insulation layers reflect thermal energy and cooling energy back to internal premises, i.e. only the air is heated or cooled, reducing thus the energy consumption. A drawback to this solution is that the panels are installed on the walls of indoor premises, wherein the area of the useful indoor premises is reduced, which restricts and has a negative impact on the use conditions of the building.

The closest solution to the Invention by its technical nature (JP 2001011964, ishilgumi Doken KK, published on 16.01.2001) is intended for the improvement of the energy efficiency of a building by reducing not only the heating energy volume, but also the cooling energy volume. In the solution a layer of thermal insulation is installed between the external wall and the internal wall of the building, while the interval wall contains a base board, and a layer containing a radioactive powder, an antibacterial substance and an organic binder. With this solution the thickness of the thermal insulation layer is relatively big, which reduces the useful area of internal premises planned to the building area and there is a risk of the formation of cold bridges, damaging the building and having a negative impact on use conditions.

In a known solution (Aluthermo "Installation Instruction", www.alutherma.be document XP55049068A published on 07.05.2007, pages 3,4,5), an multi-layer insulation material "Aluthermo Quattro" is provided. The insulation material consists of seven layers: 1st and 7th layers are of pure aluminium foil, 30 µ thick, treated against oxidation; 2nd and 6th layers are layers of dry air bubbles enclosed in fire-retardant polyethylene, wherein the bubbles have a diameter of 10 mm and a height of 4 mm; 4th layer is a fire-retardant and water repellent polyethylene foam; 5th layer is of pure aluminium foil treated against oxidation. The insulation material "Aluthermo Quattro" is installed on the external wall as well as to the internal wall of the building. The insulation is fastened to wooden framework so that a stable air gap remains between the Aluthermo insulation and the insulated wall.

In planning new buildings, the thickness of the thermal insulation layer is also important, because the thinner it is, the bigger is useful indoor area of the premise. In a built-up area it is extremely important to achieve a maximum useful area of the building in relation to the surface unit of the building area, since the building area is limited, but from the aspect of using the building it is important to increase the useful indoor area to the maximum. Accordingly, the thinner the walls, the bigger the useful area within the same building area. Installing a regular thermal insulation (for example mineral wool, polystyrene foam, etc.) to the Internal face of the external wall of a building (such as installing additional thermal insulation in a layer of 50 to 700 mm), reduces substantially the area of indoor premises; for example, in case of a building with the building area of 20 x 30 m, the area of indoor premises would be reduced even by 9%. Such solution also limits and has a substantial negative impact on the use conditions of the building.

The disclosed invention solves the problems In the prior art, while also reduces the consumption of heating and cooling energy in the building.

### Summary of the invention

The installation of a regular additional thermal insulation layer to the internal face of external boundary structures is complex from the aspect of construction engineering and construction physics, requiring execution with a high volume of resources and high professional level.

With modern air conditioning systems, the indoor temperature of a building is adjusted, depending on the time the rooms are used, for example, by reducing the heating power in the winter and the cooling power in the summer in the period outside the working hours (evenings, nights, holidays) In order to reduce costs. However, in such case a factor, which hinders the efficient use of energy, is the thermal inertia of external boundary structures, due to which an important part of heating energy or cooling energy is spent on the heating or cooling of the external boundary structures. Also, the condensation of air moisture occurs in buildings, causing substantial damages to the buildings.

In order to eliminate these problems, the following solution Is presented: a multi-layer of airtight thermal insulation material, which insulates thermal energy and moisture, and reflects thermal energy, is placed on the internal face of the external boundary structure of the building, under a covering layer and a finishing layer, wherein the layer thickness of the thermal insulation material is non-substantial (a layer of up to 10 mm), but with a relatively effective thermal energy insulation capacity. The multi-layer thermal insulation material may again be installed In multiple layers, if needed, depending on the climatic conditions at the location of the building or the need of energy efficiency in the building. With this insulation of the internal face of the external boundary structure the need for energy in the building becomes substantially lower.

### List of figures

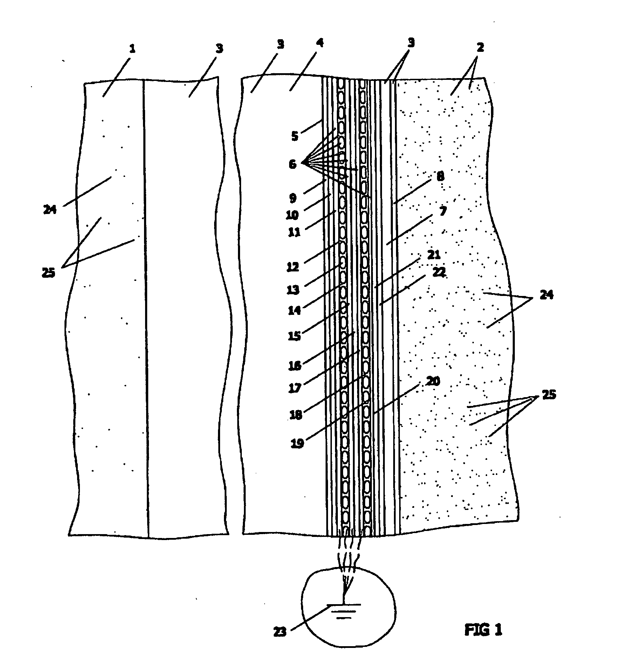

Figure 1 - section of external environment, boundary structure and indoor premise;

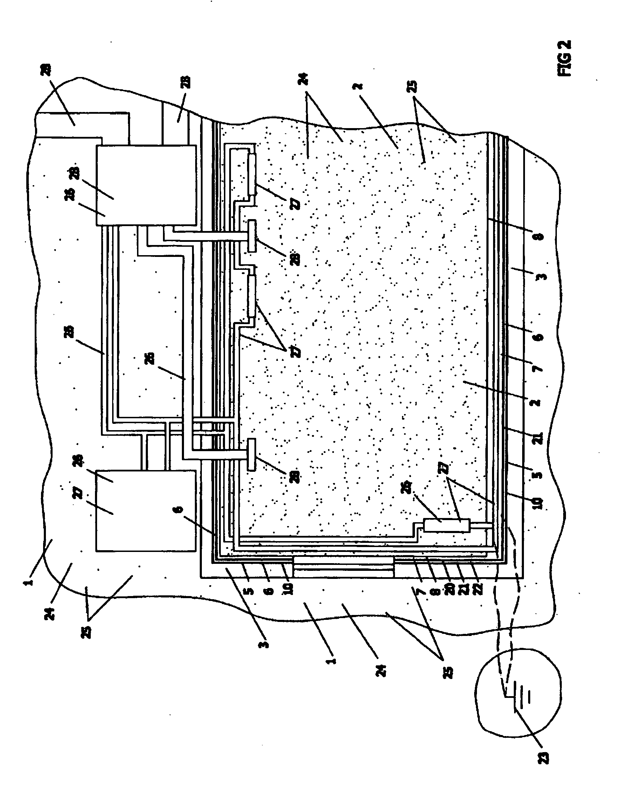

Figure 2 - layout of outdoor environment, indoor premise, boundary structure and air conditioning system.

### Exemplary embodiment of the invention

For the purpose of reducing the need for heating and cooling energy, a multi-layer of the thermal insulation material 6, which insulates thermal energy and moisture and reflects heating energy, Is placed on the internal face 5 of the supporting structure 4 of boundary structure 3 that separates the outdoor environment 1 from the indoor premise 2. The thermal insulation material 6 is covered with a covering layer 7, on top of which the finishing layer 8 is installed.

In case of existing buildings, depending on the function of the indoor premise 2 of the building, the existing finishing layer together with its substrate are removed until the internal face of the supporting structure 4 prior to the installation of the thermal insulation material 6. The internal face 5 of the supporting structure 4 is cleaned of dust and loose particles, and is coated with a bonding primer 9. The thermal insulation composite material 6 is placed in an airtight manner on the internal face 5 of the supporting structure 4, using a moisture-resistant adhesive 10. Depending on the use conditions of the indoor premise 2 and the structure of the boundary structure 3, the thermal insulation material 6 may also be mounted in an airtight and moisture-resistant manner on the existing finishing layer of the boundary structure 3. The thermal insulation material 6 has a multi-layer structure, containing the layers (plies) below. The layer (ply) 11 is made from aluminium foil with thickness of about 30 microns and the aluminium foil has been pre-treated against oxidation; next, the layer (ply) 12 is made from fire-retardant polyethylene, which contains bubbles (gaps) 14 with diameter of about 10 mm and height of about 4 mm, filled with dry air 13; next, the layer (ply) 15 is made from aluminium foil with thickness of about 30 microns; next, the layer (ply) 16 is made from fire-retardant and water-repelling polyethylene foam with thickness of about 3 mm; next, the layer (ply) 17 is made from aluminium foil with thickness of about 30 microns; next, the layer (ply) 18 is made from fire-retardant polyethylene, which contains bubbles (gaps) 14 with diameter of about 10 mm and height of about 4 mm, filled with dry air 13; next, the layer (ply) 19 is made from aluminium foil with thickness of about 30 microns and the aluminium foil has been pre-treated against oxidation. The multi-layer thermal insulation material 6 comprises seven layers (plies).

Depending on the climatic conditions in the outdoor environment 1 and the need for energy efficiency in the indoor premise 2, the multi-layer thermal insulation material 6 is installed in multiple layers, if needed, for example in two or three layers.

Next the surface 20 of the thermal insulation material 6 is treated with a bonding primer 21, base mesh 22 is bonded and covering (protection) layer 7 is installed on it. Depending on the function of the indoor premise 2, covering layer 7 is made from tiles that endure mechanical shocks and random impacts (such as cement fibre boards in boundary walls, a layer of fibre concrete under the flooring) or from protection boards (such as gypsum boards in boundary walls or ceiling). The covering layer 7 is covered with finishing layer 8.

The surfaces of all the recesses in the external boundary (such as the recesses for electrical equipment, pipe lead-throughs, door and window reveals, etc.) are also covered with the thermal insulation material 6.

The aluminium foil layers (plies) 11, 15, 19 are grounded to avoid static discharge potential difference and are thereby also connected with the equipotentially grounding facility 23 of the building, to avoid static discharge.

The temperature of air 24 and relative level of moisture (humidity) 25 of air 24 in the indoor premise 2 are maintained optimum in the premise by means of an air conditioning system 26, depending on the number of people in the premise. The air conditioning system 26 consists of a heating and cooling system 27 and a mechanical supply and extraction ventilation system 28. Outside working hours (in evenings, nights, holidays), the air conditioning system in the indoor premise is adjusted to a minimum level of energy consumption. The heating and cooling energy of the heating and cooling system 27, spreading in indoor premise 2 by way of radiation is reflected back to the indoor premise by means of aluminium foil layers (plies) 11, 15 19.

With the presented solution the thermal energy of the indoor premise cannot escape to the outdoor environment 1, i.e. It Is not necessary to spend energy to heat up or cool down the supporting walls of the building. With modem heating and cooling systems it is possible to maintain the indoor climatic parameters of the premises during winter and summer within the optimum range, according to the needs and schedule of the users of the indoor premise 2. Thus, by insulating the external boundary structures from the inside, the efficiency of the air conditioning systems of the building will become substantially higher in comparison to the solution with regular boundary structures.

In comparison to solutions in which the thermal insulation is located outside the boundary, the temperature of indoor premises can be lowered substantially more, if the thermal insulation is located on the internal face because of the absence of the thermal inertia and the moisture-related inertia of the external boundary, meaning that no time or energy is required to cool down or warm up the external boundary, and at the beginning of work it takes less time and energy to bring the inner surfaces of the external boundary in the premises to correspond to the thermal comfort parameters.

Using radiant heating becomes especially efficient due to the absence of thermal energy loss through a massive external boundary, and the thermal energy that spreads by radiation is directed back to the indoor premise from the internal face of the boundary structure of the building by means of reflection.

The Nordic countries in the summer and Southern countries around the year require cooling of indoor premises, since the content of moisture is higher in the warm air and the content of moisture in the boundaries also increases, drying up due to the coolness and lower content of moisture (humidity) in indoor premises, i.e. moisture sorption occurs from boundaries. In case of the insulation (composite) material, which has the minimum thermal resistance R 5.70 m² x K/W (i.e. maximum thermal transmittance U=0.175W/m² x K), is airtight and water-tight, no sorption of water vapour into the indoor premise can occur, therefore it is not necessary to cool the quantity of moisture that would penetrate the external boundary of the building, and therefore it would require less energy to cool the premise. With the installation of the dense composite material (coefficient of diffusion resistance µ=∞) on the internal surface of the boundary structure also the infiltration through the structure is eliminated, which again increases the efficiency of the air conditioning system and reduces the heating and cooling energy consumption.

With the presented additional thermal insulation of the boundary structure, the annual energy (heat) consumption per 1 m² of boundary structure surface is reduced by 60KWh/(m² x year) in average.

## Claims

1. A method of construction of an energy-efficient building whereby a multi-layer thermal insulation material consisting of multiple layers of aluminium foil treated against oxidation, multiple layers of fire-retardant polyethylene and of a layer of fire-retardant and water-repellent polyethylene foam and a covering layer is installed on the internal face of the external wall of the building, whereby the multi-layer thermal insulation material (6) consists of layers installed in their order of appearance:
- layer (11) of aluminium foil;
- layer (12) of fire-retardant polyethylene having gaps (14) filled with dry air (13);
- layer (15) of aluminium foil;
- layer (16) of fire-retardant and water-repelling polyethylene foam;
- layer (17) of aluminium foil;
- layer (18) of fire-retardant polyethylene having gaps (14) filled with dry air (13);
- layer (19) of aluminium foil;
**characterized in that** the layers of aluminium foil are equipotentially grounded and the multi-layer thermal insulation material (6) is bonded in a moisture resistant and airtight mannerto the whole surface of the internal face of the external wall, and the functionally necessary temperature and relative moisture of the indoor space (2) are controlled by an air-conditioning system (26) without respect to thermal inertia or to inertia related to the moisture content of the external wall.

2. A method according to claim 1, **characterized in that** the multi-layer thermal insulation material (6) is bonded directly to the internal face of the external wall.

3. A method according to claim 1, **characterized in that** the multi-layer thermal insulation material (6) is bonded directly to the existing finishing layer of the internal face of the external wall.

4. A method according to claims 1 to 3, **characterized in that** covering layer (7) is installed directly on the internal face of the multi-layer thermal insulation material (6) and is finished with a finishing layer (8).

5. A method according to claims 1 to 4, **characterized in that** the multi-layer thermal insulation material (6) is installed in multiple layers depending on the climatic conditions at the location of the building wherein the layers of multi-layer thermal insulation material (6) are bonded to one another in an airtight and moisture-resistant manner.

6. A method according to claims 1 to 5, **characterized in that** the thermal transmittance of the thermal insulation layer is less than 0.175 W/m²K.

## Patentansprüche

1. Verfahren zur Bauen eines energieeffizienten Gebäudes, wobei ein mehrlagiges thermisches Isoliermaterial bestehend aus mehreren Schichten Aluminiumfolie, die gegen Oxidation behandelt sind, mehreren Schichten feuerhemmenden Polyethylens und einer Schicht feuerhemmenden und wasserabweisenden Polyethylenschaums und einer Deckschicht besteht, die auf der Innenfassade der Außenwand des Gebäudes installiert wird, wobei der mehrlagige Wärmedämmstoff (6) aus Schichten in folgender Reihenfolge besteht:
- Schicht (11) aus Aluminiumfolie;
- Schicht (12) aus feuerhemmendem Polyethylen mit Aussparungen (14), die mit trockener Luft (13) gefüllt sind;
- Schicht (15) aus Aluminiumfolie;
- Schicht (16) aus feuerhemmendem und wasserabweisendem Polyethylenschaum;
- Schicht (17) aus Aluminiumfolie;
- Schicht (18) aus feuerhemmendem Polyethylen mit Aussparungen (14), die mit trockener Luft (13) gefüllt sind;
- Schicht (19) aus Aluminiumfolie;
***dadurch gekennzeichnet, dass*** die Schichten aus Aluminiumfolie isoelektrisch geerdet sind und der mehrlagige Wärmedämmstoff (6) feuchtigkeitsbeständig und luftdicht mit der gesamten Oberfläche der Innenseite der Außenwand verklebt ist, und die funktional notwendige Temperatur und relative Luftfeuchtigkeit des Innenraums (2) durch eine Klimaregelanlage (26) ohne Bezug auf Wärmeträgheit oder Trägheit bezüglich des Feuchtigkeitsgehalts der Außenwand gesteuert wird.

2. Verfahren gemäß Anspruch 1, **dadurch gekennzeichnet, dass** der mehrlagige Wärmedämmstoff (6) direkt mit der Innenseite der Außenwand verklebt ist.

3. Verfahren gemäß Anspruch 1, **dadurch gekennzeichnet, dass** der mehrlagige Wärmedämmstoff (6) direkt mit der bestehenden Abschlussschicht der Innenseite der Außenwand verklebt ist.

4. Verfahren gemäß Ansprüchen 1 bis 3, **dadurch gekennzeichnet, dass** die Deckschicht (7) direkt auf der Innenseite des mehrlagigen Wärmedämmstoffen (6) verklebt und mit einer Abschlussschicht (8) fertiggestellt ist.

5. Verfahren gemäß Ansprüchen 1 bis 4, **dadurch gekennzeichnet, dass** der mehrlagige Wärmedämmstoff (6) in mehreren Schichten abhängig von den klimatischen Bedingungen am Standort des Gebäudes installiert ist, wobei die Schichten mehrlagigen Wärmedämmstoffes (6) miteinander aufrecht und feuchtigkeitsabweisend verklebt sind.

6. Verfahren gemäß Ansprüchen 1 bis 5, **dadurch gekennzeichnet, dass** der Wärmedurchgangskoeffizient der Wärmedämmschicht niedriger als 0,175 W/m² K ist.

## Revendications

1. Procédé de construction d'un bâtiment à faible consommation énergétique dans lequel un matériau multicouche d'isolation thermique constitué de plusieurs couches de feuille d'aluminium traité contre l'oxydation, de multiples couches de polyéthylène ignifuge et d'une couche de mousse de polyéthylène ignifuge et hydrofuge et une couche de recouvrement est installée sur la face interne de la paroi externe du bâtiment, de sorte que le matériau d'isolation thermique multicouche (6) est constitué de couches installées dans leur ordre d'apparition:
- couche (11) de feuille d'aluminium;
- couche (12) de polyéthylène ignifuge ayant des interstices (14) remplis d'air sec (13);
- couche (15) de feuille d'aluminium;
- couche (16) de mousse de polyéthylène ignifuge et hydrofuge;
- couche (17) de feuille d'aluminium;
- couche (18) de polyéthylène ayant des interstices (14) remplis d'air sec (13);
- couche (19) de feuille d'aluminium;
**caractérisée en ce que** les couches de feuille d'aluminium sont des couches de masse équipotentielle de matériau d'isolation thermique (6) collées d'une manière étanche à de l'air résistant à l'humidité sur toute la surface de la face interne de la paroi externe et la température fonctionnelle nécessaire ainsi que l'humidité relative de l'espace intérieur (2) sont commandés par un système de conditionnement d'air (26), sans tenir compte de l'inertie thermique ou de l'inertie liée à la teneur en humidité de la paroi externe.

2. Procédé selon la revendication 1, **caractérisé en ce que** le matériau d'isolation thermique multicouche (6) est collé directement sur la face interne de la paroi externe.

3. Procédé selon la revendication 1, **caractérisé en ce que** le matériau d'isolation thermique multicouche (6) est collée directement à la couche de finition existante de la face interne de la paroi externe.

4. Procédé selon les revendications 1 à 3, **caractérisé en ce que** la couche de recouvrement (7) est installée directement sur la face interne du matériau d'isolation thermique multicouche (6), et est finie avec une couche de finition (8).

5. Procédé selon les revendications 1 à 4, **caractérisé en ce que** le matériau d'isolation thermique multicouche (6) est installé en couches multiples en fonction des conditions climatiques à l'emplacement du bâtiment où les couches de matériau multicouche d'isolation thermique (6) sont collées les unes aux autres de manière étanche et résistante à l'humidité.

6. Procédé selon les revendications 1 à 5, **caractérisé en ce que** le facteur de transmission thermique de la couche d'isolation thermique est inférieur à 0,175 W/m2K.
